# EUROPÄISCHE PATENTSCHRIFT

(11) **EP 2 415 581 B1**
(45) Veröffentlichungstag und Bekanntmachung des Hinweises auf die Patenterteilung: **11.12.2013**
(21) Anmeldenummer: 11006010.0
(22) Anmeldetag: 22.07.2011
(51) Int. Cl.: B29C 45/27, B29C 45/73

(54) **Spritzgiessdüse**
Injection moulding nozzle
Buse de moulage par injection

(30) Priorität: 03.08.2010 DE 102010033153
(43) Veröffentlichungstag der Anmeldung: 08.02.2012
(73) Patentinhaber: Otto Männer Innovation GmbH, 79353 Bahlingen (DE)
(72) Erfinder: Spuller, Swen, 79362 Forchheim (DE)
(74) Vertreter: Dimmerling & Huwer

(56) Entgegenhaltungen:
- EP-A1- 1 389 517
- WO-A1-00/46008
- DE-A1- 10 358 285
- DE-A1-102004 002 882
- DE-U1-202009 011 904
- JP-A- 2002 079 549
- JP-A- 2002 331 552
- US-A- 6 045 742

## Beschreibung

Die Erfindung betrifft eine Spritzgießdüse nach dem Oberbegriff des Anspruchs 1.

Eine derartige Spritzgießdüse mit einem länglichen Grundkörper, durch den sich ein Kanal für Schmelze erstreckt, ist aus JP-A-2002 331 552 bekannt. Auf dem Grundkörper ist ein längliches Temperierelement angeordnet ist, das eine den Grundkörper umgrenzende Hülse und ein Heizelement aufweist, welches zwischen der Hülse und dem Grundkörper angeordnet ist. An beiden Enden des Temperierelements hat das Heizelement Heizwicklungen, die über eine Verbindungsleitung miteinander verbunden sind. Die Spritzgießdüse ist derart in einer Innenhöhlung einer Formplatte angeordnet, dass die Hülse durch einen Zwischenraum in radialer Richtung von der die Innenhöhlung umgrenzenden Innenwand der Formplatte beabstandet ist. Ein in Höhe der Verbindungsleitung befindlicher Abschnitt der Hülse ist über ein die Hülse umgrenzendes, ringförmiges Wärmeübertragungselement wärmeleitend mit der Innenwand der Innenhöhlung verbunden. Dadurch soll in einem zwischen den Heizwicklungen befindlichen Abschnitt des Grundkörpers die Wärmeeinleitung in den Grundkörper reduziert werden.

Aus JP-A-2002 079 549 ist ferner eine Spritzgießdüse mit einem länglichen Grundkörper bekannt, der einen mit einer Auslassöffnung verbundenen Kanal für Schmelze aufweist. Auf dem Grundkörper ist ein längliches Temperierelement angeordnet, das eine den Grundkörper umgrenzende Hülse und ein Heizelement aufweist, welches zwischen der Hülse und dem Grundkörper angeordnet ist. Die Spritzgießdüse ist derart in einer Innenhöhlung einer Formplatte angeordnet, dass ein von der Auslassöffnung der Spritzgießdüse axial beabstandeter Abschnitt der Hülse durch einen Zwischenraum in radialer Richtung von der Innenwand beabstandet ist. Der Zwischenraum ist mit Zu- und Ableitungen verbunden, mittels denen der Zwischenraum mit Kühlluft durchströmt werden kann. Dadurch soll in einem von der Auslassöffnung der Spritzgießdüse axial beabstandeten Abschnitt des Grundkörpers die Wärmeeinleitung in den Grundkörper reduziert werden.

Aus US-A-6 045 742 ist ferner eine Spritzgießdüse mit einem länglichen Grundkörper bekannt, auf dem ein längliches Temperierelement angeordnet ist, das eine den Grundkörper umgrenzende Hülse und ein darauf befindliches Heizelement aufweist. Die Hülse hat an ihrer dem Grundkörper zugewandten Innenseite in Umfangsrichtung umlaufende Ringnuten, deren Nutböden radial vom Grundkörper beabstandet sind. Zwischen den Nuten kontaktiert die Hülse den Grundkörper.

Eine Spritzgießdüse mit einem länglichen Grundkörper, durch den sich ein Kanal für Schmelze erstreckt, und auf welchem ein längliches Temperierelement angeordnet ist, das ein Heizelement zur Einleitung von Wärme in den Grundkörper aufweist, welches an beiden Enden des Temperierelements Heizwicklungen aufweist, wird von der Patentanmelderin seit vielen Jahren hergestellt und vertrieben. Bei der bekannten Spritzgießdüse ist eine Heizwicklung auf einer Hülse angeordnet, welche auf einen in der Regel zylinderförmigen Grundkörper aufgeschoben werden kann. Mittels der Heizwicklung lässt sich der Grundkörper der Spritzgießdüse erhitzen, sodass die durch den Kanal fließende Schmelze flüssig bleibt.

Da der Grundkörper der Spritzgießdüse regelmäßig in seinen Endbereichen zur Befestigung mit einem Spritzgießwerkzeug verbunden ist, findet in den Endbereichen des Grundkörpers ein Wärmefluss von der Spritzgießdüse in das Spritzgießwerkzeug statt, wodurch sich die Endbereiche des Grundkörpers der Spritzgießdüse abkühlen. Dies ist sehr nachteilig, da die Schmelze in den Endbereichen einfrieren kann, wodurch eine Verarbeitbarkeit unmöglich werden kann.

Des Weiteren kann dadurch, dass im mittleren Bereich des Grundkörpers der Spritzgießdüse keine Wärme abgeleitet wird, in diesem Bereich ein Wärmestau entstehen, was zu einer überhöhten Temperatur führen kann. Dies ist ebenfalls nachteilig, da es für die Qualität der Schmelze und damit des herzustellenden Produktes von großer Bedeutung ist, dass die Temperatur der Schmelze längst des Kanals möglichst gleichmäßig ist.

Um diesen Nachteilen entgegenzuwirken, werden Spritzgießdüsen an den Verbindungsstellen mit dem Werkzeug mit einem schlecht wärmeleitenden Element wie beispielsweise einem Keramikring versehen, wie dies beispielsweise aus der DE 10 2004 009 806 B3 bekannt ist. Eine weitere Möglichkeit besteht darin, dass die Heizwicklung in den Endbereichen des Grundkörpers der Spritzgießdüse enger gewickelt ist als im mittleren Bereich. Hierdurch werden die Endbereiche des Grundkörpers der Spritzgießdüse stärker erhitzt als der mittlere Bereich.

So ist beispielsweise aus der DE 20 2009 011 904 U1 ein Heizelement bekannt, welches eine Hülse aufweist, auf der eine Heizwicklung aufgebracht ist. Die Windungen der Heizwicklung haben in den Endbereichen der Hülse eine sehr geringe Steigung wohingegen sie im mittleren Bereich der Hülse eine sehr große Steigung haben. Hierdurch befinden sich im mittleren Bereich weniger Windungen als in den Endbereichen, wodurch der mittlere Bereich der Hülse geringer erwärmt wird als die beiden Endbereiche der Hülse.

Wenngleich durch die bekannten Maßnahmen auch erreicht wird, dass der Wärmeabfluss an den beiden Enden des Grundkörpers der Spritzgießdüse in das Spritzgießwerkzeug verringert wird beziehungsweise die beiden Enden des Grundkörpers des Spritzgießwerkzeugs stärker erhitzt werden als der mittlere Bereich des Grundkörpers, so erreicht die Temperatur im mittleren Bereich des Grundkörpers des Spritzgießwerkzeugs aufgrund eines Wärmestaus dennoch manchmal Werte, wodurch sich im Kanal befindliche Schmelze beschädigt werden kann. Der Temperaturverlauf der Schmelze längs des Kanals ist somit noch nicht zufrieden stellend.

Sehr vorteilhaft ist es wenn das Heizelement an einer Trägerhülse angeordnet ist und die Verbindungsleitung wärmeisoliert in einer ersten Nut angeordnet ist. Durch die Wärmeisolierung der Verbindungsleitung in der ersten Nut wird die von der Verbindungsleitung in den mittleren Bereich des Grundkörpers eingeleitete Wärme nochmals verringert. Die Wärmeisolierung kann mittels eines geringen wärmeleitenden Materials erfolgen oder dadurch, dass die Verbindungsleitung mit der Wandung der ersten Nut nicht in Berührung kommt.

Eine weitere Verringerung der Wärmeeinleitung in den Grundkörper kann dadurch erfolgen, dass parallel zur ersten Nut wenigstens eine zweite Nut angeordnet ist, wie dies bei einer weiteren besonderen Ausführungsform der Erfindung vorgesehen ist. In vorteilhafter Weise sind beidseits der ersten Nut zwei weitere Nuten angeordnet. Hierdurch wird der Fluss der Wärme, die durch die Verbindungsleitung in die Wandungen der ersten Nut eingeleitet wird, unterbrochen. Das heißt, der Bereich der Hülse, in dem die erste Nut angeordnet ist, wird durch die beiden weiteren Nuten von der restlichen Hülse isoliert.

Anstelle oder zusätzlich zu den zuvor beschriebenen Maßnahmen kann eine Verringerung der Wärmeeinleitung in den Grundkörper auch dadurch erreicht werden, dass der Querschnitt der Trägerhülse vergrößert wird. Durch die Querschnittsvergrößerung verteilt sich einerseits die in die Trägerhülse eingeleitete Wärme auf ein größeres Volumen, wodurch der Temperaturanstieg geringer wird. Andererseits erhöht sich die Oberfläche der Trägerhülse, wodurch mehr Wärme an die Umgebung abgegeben werden kann. Des Weiteren wird durch die Querschnittsvergrößerung der Abstand der Trägerhülse zu einer Wandung einer in dem betreffenden Spritzgießwerkzeug ausgebildeten Ausnehmung, in der die Spritzgießdüse regelmäßig angeordnet ist, verringert, wodurch Wärme an das Spritzgießwerkzeug abgegeben wird.

Es ist Aufgabe der Erfindung eine Eingangs genannte Spritzgießdüse derart auszubilden, dass der Temperaturverlauf der sich im Kanal befindlichen Schmelze verbessert ist.

Die Lösung dieser Aufgabe ergibt sich aus den Merkmalen des Anspruchs 1. Vorteilhafte Weiterbildungen der Erfindung ergeben sich aus den Unteransprüchen.

Dadurch, dass die im Kennzeichnungsteil des Anspruchs 1 genannten Mittel zur Verringerung der Wärmeeinleitung in den Grundkörper vorhanden sind, lässt sich das Temperaturprofil längs des Kanals für die Schmelze einstellen. So kann dadurch, dass im mittleren Bereich des Grundkörpers die Wärmeeinleitung in den Grundkörper verringert wird, erreicht werden, dass die Temperatur des Grundkörpers in diesem Bereich einen vorbestimmten Wert nicht übersteigt. Durch gezielte partielle Verringerung der Wärmeeinleitung in den Grundkörper kann sogar erreicht werden, dass die Temperatur des Grundkörpers längs des Kanals nahezu gleich bleibt. Dies wirkt sich äußerst vorteilhaft auf die Qualität des mittels der Spritzgießdüse herzustellenden Spritzgießbauteils aus.

Die Wärmeeinleitung in den Grundkörper lässt sich auf einfache Weise dadurch verringern, dass die beiden Heizwicklungen mittels einer parallel zur Achse des Grundkörpers verlaufenden Verbindungsleitung verbunden sind. Hierdurch ist die Länge der Heizwicklungen im mittleren Bereich des Grundkörpers minimal, wodurch eine entsprechend geringe Wärmemenge in den mittleren Bereich des Grundkörpers eingeleitet wird. Durch die Wärmeisolierung der Verbindungsleitung in der ersten Nut wird die von der Verbindungsleitung in den mittleren Bereich des Grundkörpers eingeleitete Wärme verringert. Die Wärmeisolierung kann mittels eines geringen wärmeleitenden Materials erfolgen oder dadurch, dass die Verbindungsleitung mit der Wandung der ersten Nut nicht in Berührung kommt. Eine weitere Verringerung der Wärmeeinleitung in den Grundkörper erfolgt dadurch, dass parallel zur ersten Nut wenigstens eine zweite Nut angeordnet ist.

Bei einer vorteilhaften Ausgestaltung der Erfindung sind beidseits der ersten Nut zwei weitere Nuten angeordnet, derart, dass der Fluss der Wärme, die durch die Verbindungsleitung in die Wandungen der ersten Nut eingeleitet wird, unterbrochen wird. Das heißt, der Bereich der Hülse, in dem die erste Nut angeordnet ist, wird durch die beiden weiteren Nuten von der restlichen Hülse isoliert..

Zusätzlich zu den zuvor beschriebenen Maßnahmen kann eine Verringerung der Wärmeeinleitung in den Grundkörper auch dadurch erreicht werden, dass der Querschnitt der Trägerhülse vergrößert wird. Durch die Querschnittsvergrößerung verteilt sich einerseits die in die Trägerhülse eingeleitete Wärme auf ein größeres Volumen, wodurch der Temperaturanstieg geringer wird. Andererseits erhöht sich die Oberfläche der Trägerhülse, wodurch mehr Wärme an die Umgebung abgegeben werden kann. Des Weiteren wird durch die Querschnittsvergrößerung der Abstand der Trägerhülse zu einer Wandung einer in dem betreffenden Spritzgießwerkzeug ausgebildeten Ausnehmung, in der die Spritzgießdüse regelmäßig angeordnet ist, verringert, wodurch Wärme an das Spritzgießwerkzeug abgegeben wird.

Die Vergrößerung des Querschnitts kann kontinuierlich erfolgen, sie kann jedoch auch stufig erfolgen, wobei auch mehrere Querschnittsvergrößerungen vorhanden sein können. In vorteilhafter Weise weist die Trägerhülse an der Stelle den größten Querschnitt auf, wo die Temperatur des Kanals den größten Wert annehmen würde. Dies dürfte regelmäßig in der Mitte der Trägerhülse der Fall sein.

Die Querschnittsvergrößerung kann in vorteilhafter Weise dadurch erfolgen, dass auf die Trägerhülse wenigstens eine Aufsteckhülse aufgebracht wird. Hierdurch lässt sich die Querschnittsvergrößerung auf einfache Weise erreichen, was sich sehr vorteilhaft auf die Kosten auswirkt.

Eine weitere Verringerung der Wärmeeinleitung in den Grundkörper kann dadurch erreicht werden, dass die Trägerhülse beziehungsweise gegebenenfalls die Aufsteckhülse Kühlrippen aufweist. Durch die Kühlrippen erfolgt eine Vergrößerung der Oberfläche des Temperierelements, wodurch mehr Wärme an die Umgebung abgegeben wird. Die Kühlrippen können unterschiedlich hoch ausgebildet sein. Hierdurch lässt sich die Wärmeabgabe an die Umgebung einstellen. In den Bereichen, wo die Kühlrippen eine relativ große Höhe haben, ist die Wärmeabgabe an die Umgebung entsprechend groß. Dort wo die Kühlrippen eine geringe Höhe haben, ist die Wärmeabgabe an die Umgebung entsprechend gering.

Die Kühlrippen können sich in axialer Richtung oder in Richtung des Umfangs der Trägerhülse erstrecken. Sie können aber auch einen wendelförmigen Verlauf ähnlich eines Gewindegangs mit geringer Steigung haben. Letzteres wirkt sich vorteilhaft auf die Herstellung der Kühlrippen aus.

Statt Kühlrippen oder zusätzlich zu den Kühlrippen kann die Trägerhülse beziehungsweise gegebenenfalls die Aufsteckhülse auch sich in radialer Richtung erstreckende Stifte aufweisen.

In vorteilhafter Weise können die Kühlrippen beziehungsweise die Stifte eine solche Höhe haben, dass sie mit der Wandung der Ausnehmung, in der die Spritzgießdüse regelmäßig angeordnet ist, in Wärmekontakt stehen. Hierdurch wird mehr Wärme in das Spritzgießwerkzeug eingeleitet.

Als sehr vorteilhaft hat sich eine Ausführungsform der Erfindung herausgestellt, bei der die Trägerhülse und/oder die Aufsteckhülse aus einem Werkstoff bestehen, welcher einen richtungsabhängigen Wärmeleitwert hat. Hat die Trägerhülse beziehungsweise die Aufsteckhülse in axialer Richtung einen sehr hohen Wärmeleitwert, kann Wärme aus beispielsweise dem überhitzten mittleren Bereich in die Endbereiche, welche eine geringere Temperatur haben, geleitet werden. Als Werkstoff kann beispielsweise HS400 Heatsink Material oder HAT-700 der Firma GrafTec (www.graftec.com) verwendet werden.

Die mittels der vorstehend beschriebenen Maßnahmen erreichbare Verringerung der Wärmeeinleitung in den Grundkörper kann so groß sein, dass beispielsweise im mittleren Bereich der Trägerhülse keine von dem sich im mittleren Bereich der Trägerhülse befindenden Teil der Heizwicklung ausgehenden Wärme in den Grundkörper eingeleitet wird und darüber hinaus von den sich in den Endbereichen der Trägerhülse befindenden Bereichen der Heizwicklung in den Grundkörper eingeleitete Wärme, die in den mittleren Bereich des Grundkörpers gelangt, abgeleitet wird. Das heißt, im mittleren Bereich des Grundkörpers ist dann eine negative Wärmeeinleitung, das heißt eine Wärmeableitung vorhanden.

Eine Wärmeableitung kann insbesondere auch dadurch erreicht werden, dass das Temperierelement ein aktives Kühlelement aufweist. Hierdurch kann die Temperatur des Grundkörpers im mittleren Bereich sehr effektiv gesenkt werden.

Das aktive Kühleelement kann als Rohrleitung ausgebildet sein, durch welche ein Kühlmedium leitbar ist. Hierdurch lässt sich auf einfache Weise Wärme aus dem Grundkörper der Spritzgießdüse ableiten. Als Kühlmedium kann beispielsweise Luft, Wasser oder Kohlendioxid verwendet werden.

Weist die Rohrleitung im mittleren Bereich der Trägerhülse eine Querschnittsvergrößerung auf, wie dies bei einer weiteren besonderen Ausführungsform der Erfindung vorgesehen ist, so lässt sich der Grundkörper der Spritzgießdüse nach dem Prinzip eines Kompressorkühlschranks kühlen. Hierbei wird gasförmiges Kältemittel durch einen Kompressor adiabatisch verdichtet und dem Bereich der Querschnittsvergrößerung der Rohrleitung zugeführt. Durch die Querschnittsvergrößerung entsteht ein Expansionsraum, in dem sich das Kältemittel entspannt, wodurch Kälte entsteht. Nach der Entspannung wird es wieder dem Kompressor zugeführt.

Das aktive Kühlelement kann auch als Peltier-Element ausgebildet sein. Hierdurch lässt sich gezielt Wärme aus der Trägerhülse beziehungsweise dem Grundkörper der Spritzgießdüse ableiten.

Weitere Einzelheiten, Merkmale und Vorteile der vorliegenden Erfindung ergeben sich aus der nachfolgenden Beschreibung eines besonderen Ausführungsbeispiels unter Bezugnahme auf die Zeichnung.

Es zeigt:
- Fig. 1A: eine nicht erfindungsgemäß ausgebildete Spritzgießdüse mit einer ersten Ausführungsform eines Temperierelements,
- Fig. 1 B: die in Figur 1A dargestellte Spritzgießdüse im Schnitt,
- Fig. 2: eine Ausführungsform eines erfindungsgemäß ausgebildeten Temperierelements,
- Fig. 3A: eine Ausführungsform eines nicht erfindungsgemäß ausgebildeten Temperierelements,
- Fig. 3B: das in Figur 3A dargestellte Temperierelement im Schnitt,
- Fig. 4A: eine Ausführungsform eines nicht erfindungsgemäß ausgebildeten Temperierelements,
- Fig. 4B: das in Figur 4A dargestellte Temperierelement im Schnitt,
- Fig. 5A: eine Ausführungsform eines nicht erfindungsgemäß ausgebildeten Temperierelements,
- Fig. 5B: das in Figur 5A dargestellte Temperierelement im Schnitt,
- Fig. 6A: eine Ausführungsform eines nicht erfindungsgemäß ausgebildeten Temperierelements,
- Fig. 6B: das in Figur 6A dargestellte Temperierelement im Schnitt,
- Fig. 7A: eine Ausführungsform eines nicht erfindungsgemäß ausgebildeten Temperierelements,
- Fig. 7B: das in Figur 7A dargestellte Temperierelement im Schnitt,
- Fig. 7C: das in Figur 7A dargestellte Temperierelement in der Draufsicht,
- Fig. 8A: eine Ausführungsform eines nicht erfindungsgemäß ausgebildeten Temperierelements, und
- Fig. 8B: das in Figur 8A dargestellte Temperierelement im Schnitt.

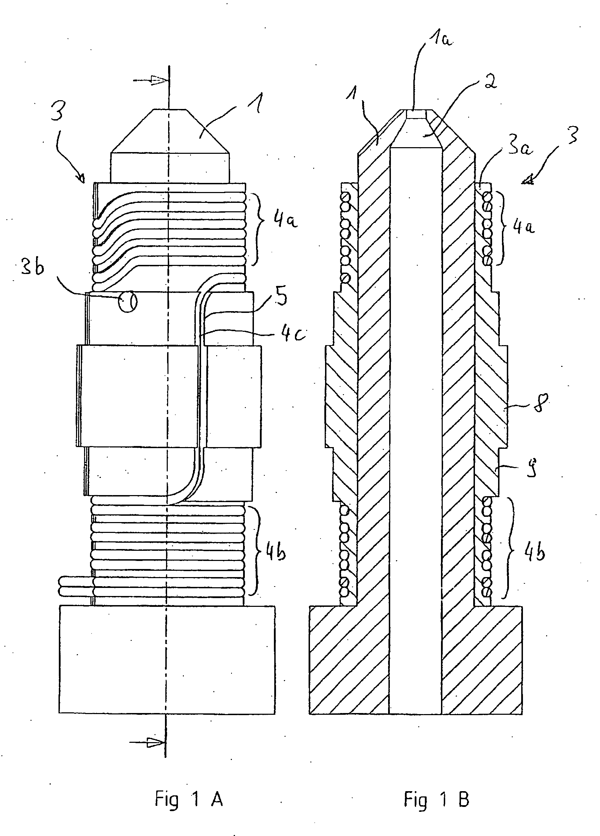

Wie Figur 1A und Figur 1B entnommen werden kann weist ein im Wesentlichem zylinderförmiger Grundkörper 1 einer Spritzgießdüse einen sich in axialer Richtung der Spritzgießdüse 1 erstreckenden Kanal 2 auf. Durch den Kanal 2 wird Schmelze zu einer Austrittsöffnung 1 a des Grundkörpers 1 der Spritzgießdüse geleitet. Auf dem Grundkörper 1 ist ein Temperierelement 3 angeordnet, welches eine Trägerhülse 3a aufweist, auf der eine Heizwicklung 4a, 4b, 4c angeordnet ist. Die Trägerhülse 3a ist auf dem Grundkörper 1 aufgeschoben und steht mit dem Grundkörper 1 in gutem thermischen Kontakt. Die Heizwicklung besteht aus einem oberen Bereich 4a und einem unteren Bereich 4b. Die beiden Bereiche 4a, 4b sind mittels einer Verbindungsleitung 4c miteinander verbunden. Die Verbindungsleitung 4c verläuft in axialer Richtung des Grundkörpers 1 der Spritzgießdüse beziehungsweise der Trägerhülse 3a. Die Windungen der oberen Heizwicklung 4a und der unteren Heizwicklung 4b sind derart in Nuten angeordnet, dass sie mit der Trägerhülse 3a in einem guten thermischen Kontakt stehen. Die Verbindungsleitung 4c ist in einer Nut 5 derart angeordnet, dass sie einen geringen thermischen Kontakt mit der Trägerhülse 3a hat.

Fließt durch die Heizwicklung ein Strom, erwärmt sich diese. Durch den guten thermischen Kontakt, den die Heizwicklung in ihrem oberen Bereich 4a und ihrem unteren Bereich 4b mit der Trägerhülse 3a hat, gibt die Heizwicklung ihre Wärme in diesen Bereichen an die Trägerhülse 3a und somit auch an den Grundkörper 1 der Spritzgießdüse ab. Durch den geringen thermischen Kontakt, den die Verbindungsleitung 4c mit der Trägerhülse 3a hat, gibt die Verbindungsleitung 4c sehr wenig Wärme an die Trägerhülse 3a ab.

Die Trägerhülse 3a hat Bereiche unterschiedlich großer Querschnitte. Der Bereich des größten Querschnitts 8 befindet sich in der Mitte der Trägerhülse 3a. Beidseits des Bereichs des größten Querschnitts 8 befinden sich Bereiche 9 mit dem zweitgrößten Querschnitt. In den beiden Endbereichen hat die Trägerhülse 3a den geringsten Querschnitt. Im Bereich des zweitgrößten Durchschnitts 9 ist eine Öffnung 3b für ein Montagewerkzeug angeordnet.

Durch die Vergrößerung des Querschnitts verteilt sich die durch die Verbindungsleitung in die Trägerhülse 3a eingeleitete Wärme beziehungsweise von den Endbereichen in den mittleren Bereich gelangende Wärme auf ein größeres Volumen, wodurch bei gleicher Wärmemenge ein geringerer Temperaturanstieg erfolgt. Des Weiteren erhöht sich durch die Vergrößerung des Querschnitts die Oberfläche der Trägerhülse 3a, wodurch die Trägerhülse 3a in den Bereichen des vergrößerten Querschnitts 8, 9 mehr Wärme an die Umgebung abgeben kann. Darüber hinaus verringert sich durch die Querschnittsvergrößerung der Abstand der Trägerhülse 3a an die Wandung einer Ausnehmung eines Spritzgießwerkzeugs, in der die Spritzgießdüse regelmäßig angeordnet ist, wodurch Wärme in das Spritzgießwerkzeug eingeleitet wird.

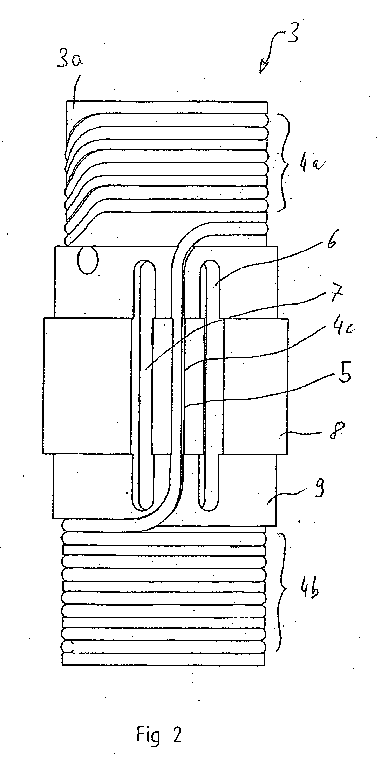

Bei der in Figur 2 dargestellten Ausführungsform des Temperierelements 3 sind in vorteilhafter Weise parallel zu der ersten Nut 5 weitere Nuten 6, 7 angeordnet. Durch die beiden Nuten 6, 7 wird erreicht, dass sich die erste Nut 5 in einem schmalen Steg befindet. Der Wärmefluss aus diesem Steg in den übrigen Bereich der Trägerhülse 3a ist durch die Nuten 6, 7 unterbrochen. Hierdurch gelangt weniger Wärme in den übrigen Bereich der Trägerhülse 3a und damit in den betreffenden Bereich des Grundkörpers 1 der Spritzgießdüse.

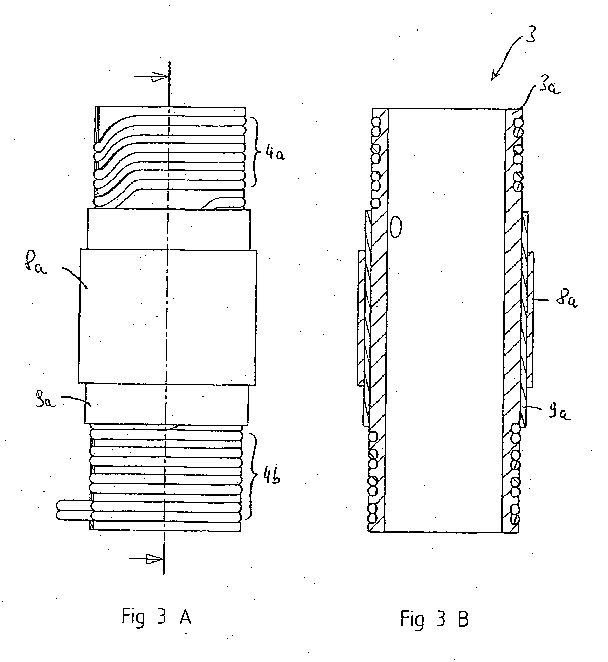

Die in den Figuren 3A und 3B dargestellte Ausführungsform des Temperierelements 3 entspricht im wesentlichen dem in Figur 1A und Figur 1B dargestellten Temperierelement. Gleiche Elemente sind mit denselben Bezugszeichen versehen.

Im Unterschied zu dem in Figur 1A und 1B dargestellten Temperierelement wird die Querschnittsvergrößerung dadurch erreicht, dass auf die Trägerhülse 3a eine erste Aufsteckhülse 9a aufgesteckt ist. Auf diese erste Aufsteckhülse 9a ist eine zweite Aufsteckhülse 8a aufgesteckt. Die Aufsteckhülsen 9a, 8a stehen in guten thermischen Kontakt untereinander und mit der Trägerhülse 3a.

Der Vorteil dieser Ausführungsform ist, dass sie sich besonders einfach herstellen lässt.

Die Aufsteckhülsen können zur besseren Montage/Demontage axial geschlitzt sein. Damit kann auch eine Klemmwirkung erzielt werden, indem der Innendurchmesser geringfügig kleiner gefertigt wird als der Außendurchmesser der Trägerhülse.

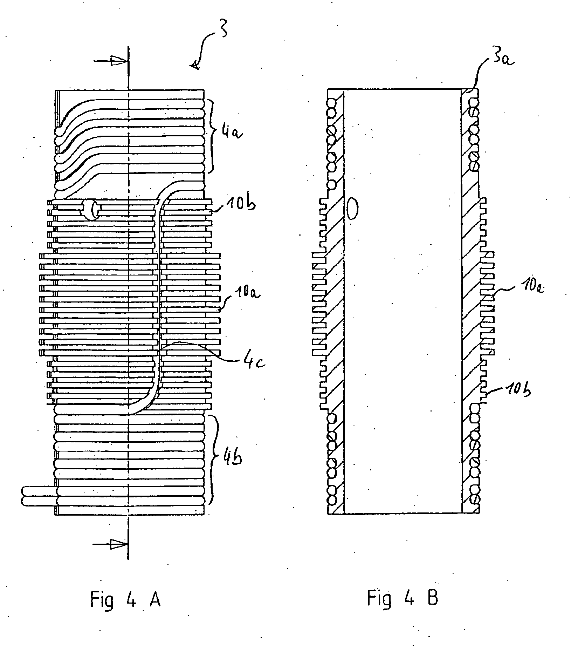

Wie den Figuren 4A und 4B entnommen werden kann, kann die Trägerhülse 3a des Temperierelements 3 Kühlrippen 10a, 10b aufweisen. Die Höhe der in der Mitte der Trägerhülse 3a angeordneten Kühlrippen 10a ist größer als die Höhe der beidseits der größeren Kühlrippen 10a angeordneten Kühlrippen 10b. In den Endbereichen der Trägerhülse 3a sind keine Kühlrippen angeordnet. Durch diese Anordnung gibt die Trägerhülse 3a in ihrem mittleren Bereich mehr Wärme an die Umgebung ab, als in den beiden angrenzenden Bereichen beziehungsweise in den Endbereichen.

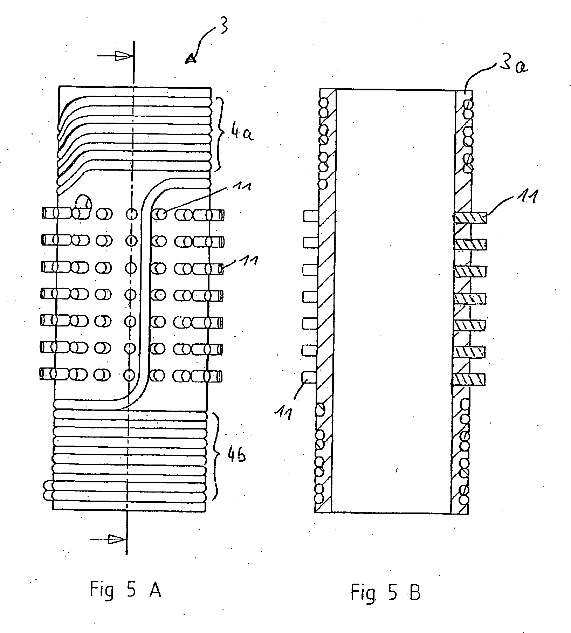

Bein den in Figuren 5A und 5B dargestellten Ausführungsform des Temperierelements 3 weist die Trägerhülse 3a statt Kühlrippen sich in radialer Richtung erstreckende Stifte 11 auf. Durch die Stifte 11 lässt sich eine sehr gut verteilte Wärmeabgabe an die Umgebung erreichen. hierdurch ist es möglich, den Temperaturverlauf im Grundkörper 1 der Spritzgießdüse sehr genau einzustellen.

Die Kühlrippen 10a, 10b sowie wie die Stifte 11 können so ausgebildet sein, dass sie an die Wandung der Ausnehmung des Spritzgießwerkzeugs in der die Spritzgießdüse regelmäßig angeordnet ist, anstoßen. Durch den hierdurch erreichten guten wärmeleitenden Kontakt kann sehr viel Wärme in das Werkzeug eingeleitet werden. Des Weiteren lässt sich sehr gezielt aus bestimmten Bereichen der Trägerhülse 3a beziehungsweise des Grundkörpers 1 der Spritzgießdüse Wärme ableiten.

Die Kühlrippen 10a, 10b sowie die Stifte 11 können ebenso wie die Trägerhülse 3a oder die Aufsteckhülsen 8a, 9a aus einem Werkstoff bestehen, welcher einen richtungsabhängigen Wärmeleitwert hat. So soll das Material der Kühlrippen 10a, 10b und der Stifte 11 in radialer Richtung einen sehr hohen Wärmeleitwert haben. Die Trägerhülse 3a sowie die Aufsteckhülsen 8a, 9a hingegen sollen in axialer Richtung einen sehr hohen Wärmeleitwert haben.

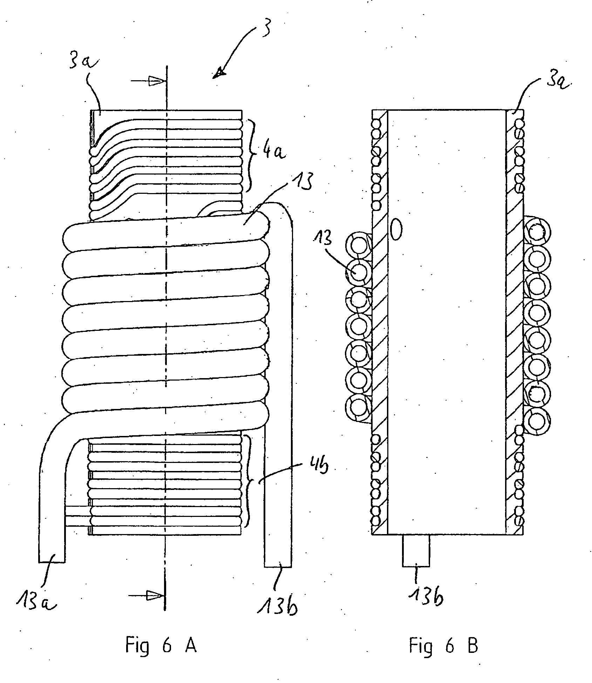

Die in den Figuren 6A und 6B dargestellte Ausführungsform des Temperierelements 3 weist in ihrem mittleren Bereich ein als Rohrleitung 13 ausgebildetes aktives Kühlelement auf. Die Rohrleitung 13 ist um die Trägerhülse 3a gewickelt und steht in gute wärmeleitenden Kontakt mit der Trägerhülse 3a. Am Eingang 13a der Rohrleitung 13 wird ein Wärmeträger in die Rohrleitung 13 eingeleitet, welcher die Rohrleitung 13 an ihrem Ausgang 13b wieder verlässt. Der Wärmeträger kann beispielsweise Luft, Wasser oder Kohlendioxid sein. Durch die Temperatur des in die Rohrleitung 13 eingeleiteten Wärmeträgers lässt sich die Wärmeableitung aus dem mittleren Bereich der Trägerhülse 3 beziehungsweise des Grundkörpers 1 der Spritzgießdüse sehr gut einstellen.

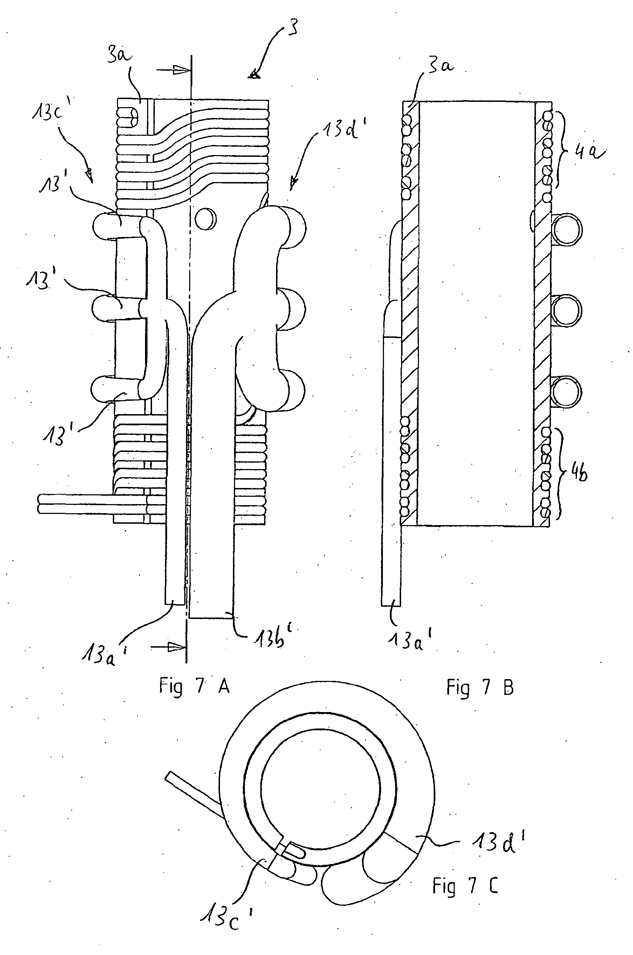

Wie den Figuren 7A bis 7C entnommen werden kann, kann die Trägerhülse 3a von parallel geschalteten Rohrleitungen 13' ringförmig umschlossen sein. An ihren mit dem Eingang 13a' der Rohrleitung verbundenen Enden 13c' ist der Querschnitt der Rohrleitungen 13' kleiner als ihren dem Ausgang 13b' der Rohrleitung 13' zugewandten Enden 13d'. Dies lässt sich insbesondere Figur 7C entnehmen. Durch die Querschnittsvergrößerung der Rohrleitung 13' vergrößert sich das Volumen der Rohrleitungen 13'.

Die Volumenvergrößerung der Rohrleitungen 13' kann als Expansionsraum für ein in der Regel gasförmiges Kältemittel genutzt werden. Das heißt, wird den Rohrleitungen 13' über den Eingang 13a' ein unter hohem Druck stehendes flüssiges Kältemittel zugeführt, kann es sich in dem Expansionsraum entspannen wodurch es wieder gasförmig wird und seine Temperatur absinkt. Das entspannte Kältemittel gelangt über den Ausgang 13b' aus der Rohrschlange 13' und kann einem Kompressor zugeführt werden, wo es wieder verdichtet wird.

Die in den Figuren 7A bis 7C dargestellte Ausführungsform des Temperierelements 3 arbeit somit nach dem Prinzip eines Kompressorkühlschranks.

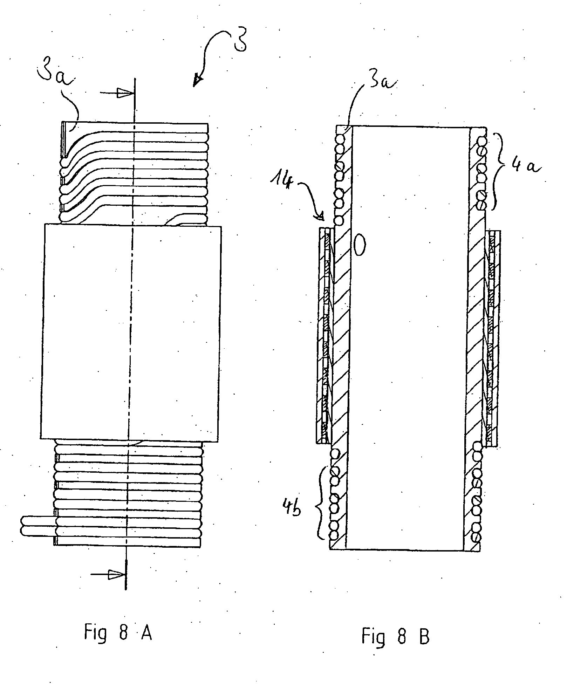

Bei der in den Figuren 8A und 8B dargestellten Ausführungsform des Temperierelements 3 ist im mittleren Bereich der Trägerhülse 3a anstelle der bei der in den Figuren 6A und 6B dargestellten Ausführungsform vorhandenen Rohrschlange 13 ein Peltier-Element 14 angeordnet. Durch das Peltier-Element 14 lässt sich gezielt Wärme aus der Trägerhülse 3a und somit aus den Grundkörper 1 der Spritzgießdüse ableiten.

## Patentansprüche

1. Spritzgießdüse mit einem länglichen Grundkörper (1), durch den sich ein Kanal (2) für Schmelze erstreckt, und auf welchem ein längliches Temperierelement (3) angeordnet ist, welches ein Heizelement (4a, 4b, 4c) zur Einleitung von Wärme in den Grundkörper (1) aufweist, welches an beiden Enden des Temperierelements (3) Heizwicklungen (4a, 4b) aufweist, die mittels einer parallel zur Achse des Heizelements (4a, 4b, 4c) verlaufenden Verbindungsleitung (4c) verbunden sind,
**dadurch gekennzeichnet,**
**dass** das Heizelement (4a, 4b, 4c) an einer Trägerhülse (3a) angeordnet ist und die Verbindungsleitung (4c) wärmeisoliert in einer ersten Nut (5) angeordnet ist, und dass parallel zur der ersten Nut (5) wenigstens eine zweite Nut (6, 7) angeordnet ist.

2. Spritzgießdüse nach Anspruch 1,
**dadurch gekennzeichnet,**
**dass** beidseits der ersten Nut zwei weitere Nuten angeordnet sind, derart, dass der Fluss der Wärme, die durch die Verbindungsleitung in die Wandungen der ersten Nut eingeleitet wird, unterbrochen wird.

3. Spritzgießdüse nach Anspruch 1 oder 2,
**dadurch gekennzeichnet,**
**dass** Mittel (8, 9) zur Verringerung der Wärmeeinleitung in den Grundkörper (1) vorhanden sind, die eine Querschnittsvergrößerung (8, 9) des Temperierelements (3) aufweisen.

4. Spritzgießdüse nach Anspruch 3,
**dadurch gekennzeichnet,**
**dass** die Querschnittsvergrößerung (8, 9) durch wenigstens eine Aufsteckhülse (8a, 9a) gebildet ist.

5. Spritzgießdüse nach einem der Ansprüche 1 bis 4,
**dadurch gekennzeichnet,**
**dass** das Temperierelement (3) wenigstens eine Kühlrippe (10a, 10b) aufweist.

6. Spritzgießdüse nach einem der Ansprüche 1 bis 5,
**dadurch gekennzeichnet,**
**dass** das Temperierelement (3) wenigstens einen Stift (11) aufweist.

7. Spritzgießdüse nach Anspruch 5 oder 6,
**dadurch gekennzeichnet,**
**dass** die wenigstens eine Kühlrippe (10a, 10b) beziehungsweise der wenigstens eine Stift (11) derart ausgebildet ist, dass sie beziehungsweise dass er an der dem Temperierelement (3) abgewandten Ende mit der Wandung einer Ausnehmung, in der die Spritzgießdüse angeordnet ist, Kontakt hat.

8. Spritzgießdüse nach einem der Ansprüche 1 bis 7,
**dadurch gekennzeichnet,**
**dass** das Temperierelement (3) wenigstens teilweise aus einem Werkstoff besteht, welcher einen richtungsabhängigen Wärmeleitwert hat.

9. Spritzgießdüse nach einem der Ansprüche 1 bis 8,
**dadurch gekennzeichnet,**
**dass** das Temperierelement ein aktives Kühlelement (13, 13a, 14) aufweist.

10. Spritzgießdüse nach Anspruch 9,
**dadurch gekennzeichnet,**
**dass** das aktive Kühlelement (13, 13a) als Rohrleitung ausgebildet ist, durch welche ein Kühlmedium leitbar ist.

11. Spritzgießdüse nach Anspruch 10,
**dadurch gekennzeichnet,**
**dass** die Rohrleitung (13a) eine Querschnittsvergrößerung (13c', 13d') aufweist.

12. Spritzgießdüse nach einem der Ansprüche 9 bis 11,
**dadurch gekennzeichnet,**
**dass** das aktive Kühlelement (14) als Peltier-Element (14) ausgebildet ist.

## Claims

1. Injection molding nozzle including an elongated base body (1) through which a channel (2) for receiving melt extends and on which an elongated temperature control element (3) is arranged which includes a heating element (4a, 4b, 4c) for introducing heat into the base body (1) that is provided at both ends of the temperature control element (3) with heating coils (4a, 4b) which are connected by means of a connecting line (4c) extending parallel to the axis of the heating element (4a, 4b, 4c), **characterized in that** the heating element (4a, 4b, 4c) is arranged on a carrier sleeve (3a) and the connecting line (4c) is arranged heat insulated in a first groove (5), and **in that** at least a second groove (6, 7) is arranged parallel to the first groove (5).

2. Injection molding nozzle according to claim 1, **characterized in that** two further grooves are arranged on both sides of the first groove in such a manner that the flow of the heat which is introduced through the connecting line into the walls of the first groove is interrupted.

3. Injection molding nozzle according to claim 1 or 2, **characterized in that** means (8, 9) for reducing the heat input into the base body (1) are provided which include an area of increased cross-section (8, 9) of the temperature control element (3).

4. Injection molding nozzle according to claim 3, **characterized in that** the area of increased cross-section (8, 9) is formed by at least one slip-on sleeve (8a, 9a).

5. Injection molding nozzle according to one of claims 1 to 4, **characterized in that** the temperature control element (3) has at least one cooling rib (10a, 10b).

6. Injection molding nozzle according to one of claims 1 to 5, **characterized in that** the temperature control element (3) includes at least one pin (11).

7. Injection molding nozzle according to claim 5 or 6, **characterized in that** the at least one cooling rib (10a, 10b) or, respectively, the at least one pin (11) is so formed that, at its end remote from the temperature control element (3), it is in contact with the wall of an opening in which the injection molding nozzle is arranged.

8. Injection molding nozzle according to one of claims 1 to 7, **characterized in that** the temperature control element (3) consists at least partially of a material which has a direction-dependent heat conduction coefficient.

9. Injection molding nozzle according to one of claims 1 to 8, **characterized in that** the temperature control element includes an active cooling element (13, 13a, 14).

10. Injection molding nozzle according to claim 9, **characterized in that** the active cooling element (13, 13a) is in the form of a tube through which a coolant can be conducted.

11. Injection molding nozzle according to claim 10, **characterized in that** the tube (13a) includes an area of increased cross-section (13c', 13d').

12. Injection molding nozzle according to one of claims 9 - 11, **characterized in that** the active cooling element (14) is in the form of a Peltier element (14).

## Revendications

1. Buse de moulage par injection comprenant un corps de base allongé (1), à travers lequel s'étend un canal (2) pour la matière en fusion, et sur lequel est disposé un élément allongé de thermorégulation (3), lequel présente un élément chauffant (4a, 4b, 4c) pour introduire de la chaleur dans le corps de base (1), lequel présente, aux deux extrémités de l'élément de thermorégulation (3), des enroulements chauffants (4a, 4b), qui sont connectés au moyen d'une conduite de liaison (4c) s'étendant parallèlement à l'axe de l'élément chauffant (4a, 4b, 4c),
**caractérisée en ce que**
l'élément chauffant (4a, 4b, 4c) est disposé sur une douille porteuse (3a) et la conduite de liaison (4c) est disposée de manière isolée thermiquement dans une première rainure (5) et **en ce qu'**au moins une deuxième rainure (6, 7) est disposée parallèlement à la première rainure (5).

2. Buse de moulage par injection selon la revendication 1,
**caractérisée en ce que**
de part et d'autre de la première rainure sont disposées deux autres rainures, de telle sorte que le flux de chaleur introduite par la conduite de liaison dans les parois de la première rainure soit interrompu.

3. Buse de moulage par injection selon la revendication 1 ou 2,
**caractérisée en ce que**
des moyens (8, 9) pour réduire l'introduction de chaleur dans le corps de base (1) sont prévus, lesquels présentent une augmentation de la section transversale (8, 9) de l'élément de thermorégulation (3).

4. Buse de moulage par injection selon la revendication 3,
**caractérisée en ce que**
l'augmentation de la section transversale (8, 9) est formée par au moins une douille enfichable (8a, 9a).

5. Buse de moulage par injection selon l'une quelconque des revendications 1 à 4,
**caractérisée en ce que**
l'élément de thermorégulation (3) présente au moins une nervure de refroidissement (10a, 10b).

6. Buse de moulage par injection selon l'une quelconque des revendications 1 à 5,
**caractérisée en ce que**
l'élément de thermorégulation (3) présente au moins une goupille (11).

7. Buse de moulage par injection selon la revendication 5 ou 6,
**caractérisée en ce que**
l'au moins une nervure de refroidissement (10a, 10b) ou l'au moins une goupille (11) est réalisée de telle sorte qu'elle soit en contact, par l'extrémité opposée à l'élément de thermorégulation (3), avec la paroi d'un évidement dans lequel est disposée la buse de moulage par injection.

8. Buse de moulage par injection selon l'une quelconque des revendications 1 à 7,
**caractérisée en ce que**
l'élément de thermorégulation (3) se compose au moins en partie d'un matériau qui présente une valeur de conductivité thermique dépendant de la direction.

9. Buse de moulage par injection selon l'une quelconque des revendications 1 à 8,
**caractérisée en ce que**
l'élément de thermorégulation présente un élément de refroidissement actif (13, 13a, 14).

10. Buse de moulage par injection selon la revendication 9,
**caractérisée en ce que**
l'élément de refroidissement actif (13, 13a) est réalisé sous forme de conduite tubulaire à travers laquelle peut être guidé un réfrigérant.

11. Buse de moulage par injection selon la revendication 10,
**caractérisée en ce que**
la conduite tubulaire (13a) présente une augmentation de la section transversale (13c', 13d').

12. Buse de moulage par injection selon l'une quelconque des revendications 9 à 11,
**caractérisée en ce que**
l'élément de refroidissement actif (14) est réalisé sous forme d'élément Peltier (14).
